(19) Europäisches Patentamt
European Patent Office
Office européen des brevets

(11) **EP 2 680 420 A1**

(12) **EUROPEAN PATENT APPLICATION**

(43) Date of publication:
**01.01.2014 Bulletin 2014/01**

(51) Int Cl.:
**H02M 3/158** (2006.01)

(21) Application number: **12305750.7**

(22) Date of filing: **26.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ST-Ericsson SA
1228 Plan-les-Ouates (CH)**

(72) Inventor: **Michal, Vratislav
38100 GRENOBLE (FR)**

(74) Representative: **Hirsch & Associés
58, Avenue Marceau
75008 Paris (FR)**

(54) **Digital on-time signal generator for a low-power pulse-skipping mode of DC-to-DC converter**

(57) The invention is directed to a method for generating a pulse signal ($T_{ON}$) driving power switches of a pulse-skipping modulated DC-to-DC converter. The method comprises:
- dividing (210) a switching clock period ($T_{CLK}$) of the DC-to-DC converter into k constant time intervals;
- generating (230) an internal clock signal having a frequency at least k-time higher than a frequency $1/T_{CLK}$ of the switching clock;
- counting (232) a number CNT of pulses of the internal clock signal during one clock period of the switching clock period;
- generating an number m (220, 222) that counts a number of discrete equidistant voltage steps $\Delta V$ of a voltage ramp $V_{CAP}$ before a reference voltage $V_{Ref}$ is reached by the voltage ramp $V_{CAP}$, each voltage step $\Delta V$ being defined by the relation

$$T_{ON\_WIN} = \frac{CNT \cdot m}{k},$$

$T_{ON\_WIN}$ being the duration of the pulse signal ($T_{ON}$).

FIG. 3

EP 2 680 420 A1

**Description**

**FIELD OF THE INVENTION**

The invention relates to the field of step-down switched direct current- direct current (DC/DC) converters, especially switched DC/DC converters with an improved behavior in term of power consumption when operating in light load mode.

**BACKGROUND**

Switching DC/DC converters convert one DC voltage level on the input to another DC voltage level on output. The conversion is performed by storing input energy temporarily and then releasing that energy to the output at a different voltage. During a first phase, the switching DC/DC converter electrically couples a source of the input voltage to a terminal of a reactive element (*e.g.* an inductor): the reactive element stores magnetic energy from an input current from the input voltage source. In this first phase, the output load receives energy from the input voltage source. In a second phase, the reactive element is disconnected from the input voltage source, and the output load receives the magnetic energy that has been stored in the reactive element during the first phase.

Acting on the ratio (referred to as duty cycle) between the first phase and second phase durations, it is possible to regulate the transfer of energy from the voltage source to the output load in a controlled way, and thus bring the voltage provided to the output load to the requested value. To this aim, the switching DC/DC converter incorporates a switching regulator for acting on the duty cycle. Most of switching regulators are power switches such as FETs (Field Effect Transistor) that are able to switch efficiently at high frequency. Thus, the average value of voltage fed to a load at the output is controlled by turning the switch between supply and load on and off at a fast pace. In practice, the switch is controlled by a driving signal or pulse, for example by means of square signal. By varying the duty cycle of such pulse in such a way to increase/decrease the duration of the main (first) phase with respect to the second phase, it is possible to increase/decrease the value of the output voltage obtainable by means of the conversion. Since the current request from the output load typically varies during operation, for keeping the output voltage value as stable as possible, the switching DC-DC converters are typically provided with a feedback control circuit, adapted to sense any difference of the output voltage from a desired voltage reference ($V_{REF}$).

A pulse skipping mode of a DC/DC (or DC-to-DC) converter is the mode, where the circuit is turned on with lower switching frequency compared to the normal PWM operation of the DC/DC converter: less pulses are generated and the power consumption is therefore considerably reduced. In the pulse skipping mode, the pulses are generated in order to transfer a defined amount of energy into output capacitor, which, in remaining time (that is, when the converter is "skipping") is holding the output voltage. Depending on the application, the pulse skipping mode can presents approximately up to 90% time of operations of the converter. To this aim, a $T_{ON}$ generator may be used for dividing the main clock switching period $T_{CLK}$ (which is accurately defined and is in order of MHz) in the times, which ensures, that at the end of the $T_{CLK}$ switching period, the inductor current is very close (say equal) to zero. The time of first phase of conduction is labeled $T_{ON}$ and the time of the second phase is labeled $T_{OFF}$ time. The main clock switching period $T_{CLK}$ is accurately fixed and divided such that $T_{ON} + T_{OFF} = T_{CLK}$.

In practice, this time division is based on an analog calibration scheme using a programmable voltage ramp generator. The ramp generator is based on the continuous-time integrator, whereas the programmability is done by the programmable current source.

The main drawback of this solution is that it requires continuous running calibration, which implies many active circuits turned-on, thus, having high current consumption. Therefore, the main factor of merit of the switched DC/DC converter, which is power efficiency, is decreased. In addition, in the case of the DC/DC converter having a battery voltage $V_{BAT}$ as input power source, this drawback decreases the battery-life.

Therefore, existing solutions for accurate generation of the $T_{ON}$ time are based on an analog solution having non-negligible power consumption. In addition these solutions do not take care of silicon surface usage, considering this in view of the recent sub-micrometer digital technologies: indeed, DC/DC converters are now available as integrated circuits needing minimal additional components. They are also available as a complete hybrid circuit component, ready for use within an electronic assembly.

Within this context, there is still a need for a digital $T_{ON}$ generator improving power efficiency and integration on silicon surface.

**SUMMARY OF THE INVENTION**

An object of embodiments of the present invention is to alleviate at least partly the above mentioned drawbacks. More particularly, embodiments of the invention aim at improving the power efficiency and reducing the fabrication cost of the fundamental block of the DC/DC converter operating in the pulse-skipping mode.

This is achieved with a method for generating a pulse signal ($T_{ON}$) driving power switches of a pulse-skipping modulated DC-to-DC converter. The method comprises dividing a switching clock period ($T_{CLK}$) of the DC-to-DC converter into k constant time intervals. The method further comprises generating an internal clock signal having a frequency at least *k*-time higher than a frequency $1/T_{CLK}$ of the switching clock. The method also comprises counting a number *CNT* of pulses of the internal clock signal during one clock period of the switching clock period. The method additionally comprises generating an number m that counts a number of discrete equidistant voltage steps $V_m$ of a voltage ramp $V_{CAP}$ before a reference voltage $V_{REF}$ is reached by the voltage ramp $V_{CAP}$, each voltage step $V_m$ being defined by the

relation $V_m = \dfrac{V_{BAT}}{k}$ wherein $V_{BAT}$ is a working input voltage of the DC-to-DC converter. The method further comprises generating the pulse signal ($T_{ON}$) from a computed number $T_{ON\_WIN}$ such that $T_{ON\_WIN} = \dfrac{CNT \cdot m}{k}$, being the duration of the pulse signal ($T_{ON}$).

That the duration of the pulse signal $T_{ON}$ is based on the division of $T_{CLK}$ into k constant time intervals of switching clock period of the DC/DC converter and on a number accurately corresponding to the ratio of $V_{REF}/V_{BAT}$, allow an accurate driving of the switches of the DC/DC converter.

Embodiments of the invention offer many advantages, including the following:

- the integration on silicon surface is improved because it relies on generation of results relying mainly on digital operations;
- the power consumption is decreased because the invention does not require the use of analog components that have high power consumption;
- the power consumption is decreased because the results of the calibration may be reused for several cycles of the pulse signal $T_{ON}$ generation;
- the accuracy of the timing is improved because the pulse signal $T_{ON}$ is calibrated according to the state of the power source, reference voltage, temperature and process variations.

This is also achieved with a circuit for generating a pulse signal ($T_{ON}$) driving power switches in a pulse-skipping modulated DC-to-DC converter. The circuit comprises an oscillator generating an internal clock signal having a frequency at least k-time higher than a frequency $1/T_{CLK}$ of the DC-to-DC converter, the switching clock having a period $T_{CLK}$. The circuit further comprises a calibration unit generating a number m that counts a number of discrete equidistant voltage steps $V_m$ of a voltage ramp $V_{CAP}$ before a reference voltage $V_{REF}$ is reached by the voltage ramp $V_{CAP}$, each voltage

step $V_m$ being defined by the relation $V_m = \dfrac{V_{BAT}}{k}$ wherein $V_{BAT}$ is a working input voltage of the DC-to-DC converter.

The circuit further comprises a counter for counting a number *CNT* of pulses of the internal clock signal during one clock period of the switching clock period. The circuit further comprises a computing unit for computing a number $T_{ON\_WIN}$ such that , $T_{ON\_WIN}$ being the duration of the pulse signal ($T_{ON}$). The circuit further comprises a generator for generating the pulse signal ($T_{ON}$) from the computed number $T_{ON\_WIN}$.

This is also achieved with the circuit according to the invention implemented on an integrated circuit.

This is also achieved with a switched-mode DC-to-DC converter with power switches and adapted to be modulated by a pulse-skipping modulation managed by the circuit according to the invention.

## BRIEF DESCRIPTION OF THE DRAWINGS

Embodiments of the invention will now be described, by way of non-limiting example, and in reference to the accompanying drawings, where:

- FIG. 1 an example of a single pulse generation in a pulse-skipping mode of a DC/DC converter;
- FIG. 2 shows an example of a typical DC/DC converter power stage and output filter LC;
- FIG. 3 shows a flowchart of an example of the method;

-

FIG. 4 shows a block schematic of an example of a calibration system of $\dfrac{V_{REF}}{V_{BAT}}$ ratio according to the invention;

- FIG. 5 shows an example of discrete voltage ramp generated by a charge transfer mechanism provided by schematic from Fig. 4;
- FIG. 6 shows a block schematic diagram of an example of a $T_{ON}$ generator system according to the invention; and
- FIG. 7 shows a time-plot of the most important waveforms of the $T_{ON}$ generator.

## DETAILED DESCRIPTION OF THE INVENTION

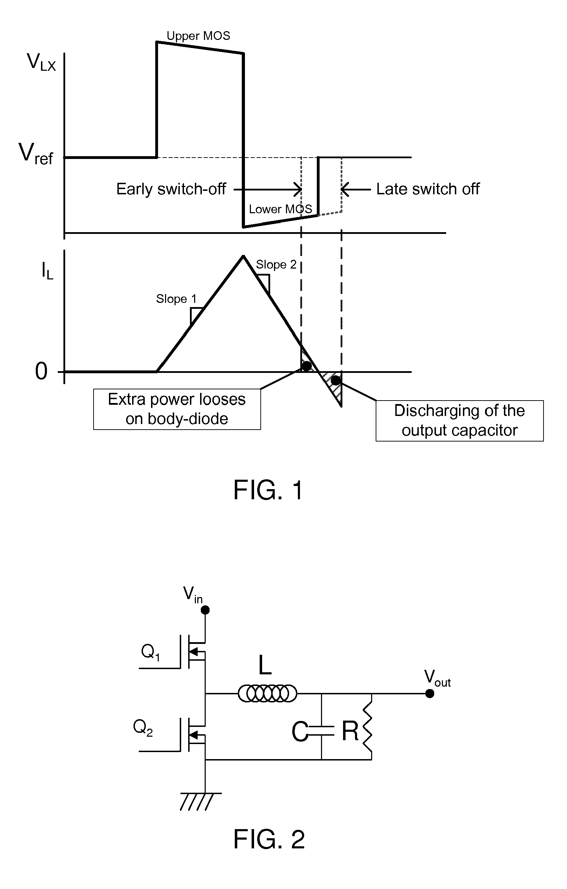

Referring to FIG. 1, it is shown the generation of one pulse in the pulse skipping mode of DC/DC (DC-to-DC) converter, where the output voltage of the DC/DC converter connected to the output filter is noted $V_{LX}$, and the inductor current of the output filter of the DC/DC converter is noted $I_L$. In FIG. 1, it is considered the case of a typical synchronous DC/DC converter wherein the inductor current always flows through either a first switch Q1 (also referred to as upper MOS) or a second switch $Q_2$ (also referred to as lower MOS), *e.g.* $Q_1$ and $Q_2$ may be MOSFETs. An example of a typical synchronous DC/DC converter is illustrated on FIG. 2. During the on-time, $Q_1$ is ON and $Q_2$ is OFF and inductor current increases. During the off-time, $Q_1$ is OFF and $Q_2$ is ON and inductor current decreases. At the on/off transition times, the inductor current has to quickly switch from one MOS to the other one.

In FIG. 1, the output voltage $V_{LX}$ starts at the voltage reference $V_{REF}$, if the previous switching cycle was skipped. When the upper MOS is active (conducting phase) - this phase being also referred to as $T_{ON}$ -, the inductor current starts to rise from zero with a positive slope of:

$$slope_1 = \frac{V_{BAT} - V_{REF}}{L} \qquad (1)$$

and the $V_{LX}$ voltage is clamped to the positive voltage level of the power source $V_{BAT}$, *e.g.* a battery. In the second phase referred to as $T_{OFF}$, the lower MOS is turned on and the inductor current decreases with negative slope of:

$$slope_2 = -\frac{V_{REF}}{L} \qquad (2)$$

and the $V_{LX}$ voltage is clamped to the negative voltage level of the input power supply. In these equations (1) and (2), $V_{REF}$ stands for the desired output voltage (reference voltage) and L stands for the inductor value. The slopes values are in A/s (ampere per second).

The main purpose of the $T_{ON}$ generator is to generate such $T_{ON}$ and $T_{OFF}$ intervals so that the inductor current at the end of the conduction cycle $T_{CLK}$ is very close to zero. Indeed, any deviation (*i.e.* current at the end of the $T_{CLK}$) either higher or lower than zero implies a high drop of the power efficiency - which implies the decrease of the main factor of merit of the DC/DC converter. This is particularly important for the case where inductance current is inverted. FIG. 1 shows power losses due to the early or late switch commutation. This is represented by the dashed areas representing looses caused by an inaccurate $T_{ON}/T_{OFF}$ generation.

In order to determine the ideal $T_{ON}$ and $T_{OFF}$ intervals, the equations (1) and (2) are equalized (3)

$$\frac{V_{BAT} - V_{REF}}{L} \cdot T_{ON} - \frac{V_{REF}}{L} \cdot T_{OFF} = 0 \qquad (3)$$

what gives:

$$\frac{T_{ON}}{T_{CLK}} = \frac{V_{REF}}{V_{BAT}} \qquad (4)$$

It result from the equation (4) that the $T_{ON}$ generator aims at dividing the main switching cycle in the pulse-skipping mode in a ratio of the reference voltage $V_{REF}$ to the power supply input voltage $V_{BAT}$ with very high accuracy.

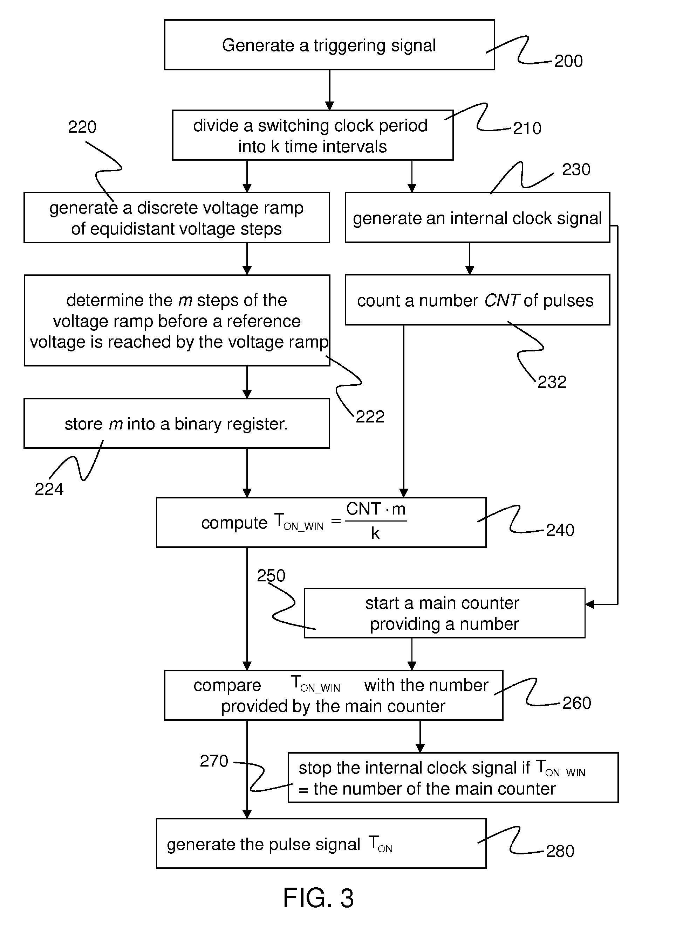

With reference to the flowchart of FIG. 3, it is proposed a method for generating a pulse signal driving power switches of a pulse-skipping modulated DC-to-DC converter. Such a method provides the generation of a pulse signal $T_{ON}$ that allows improving power efficiency and integration on silicon surface of the DC/DC converter. In particular, the method of the invention rely on dividing the DC/DC converter switching clock period $T_{CLK}$ into constant intervals, and by mathematical operation provide an appropriate division of the $T_{CLK}$ into $T_{ON}$ and $T_{OFF}$ such as:

$$\frac{V_{REF}}{V_{BAT}} = \frac{T_{ON}}{T_{CLK}} = \frac{m}{2^N} \qquad (5)$$

By respecting equation(5), the required condition of zero inductor current at the end of conduction cycle is accurately reached, which generator improving power efficiency.

In FIG. 3, three main flows are depicted: 1) the calibration of $\dfrac{V_{REF}}{V_{BAT}}$ ratio and measuring of the internal oscillator frequency (steps 2220-232), 2) the computation of $T_{ON}$ window (step 240) and 3) the generation of the pulse signal $T_{ON}$. (steps 250-280).

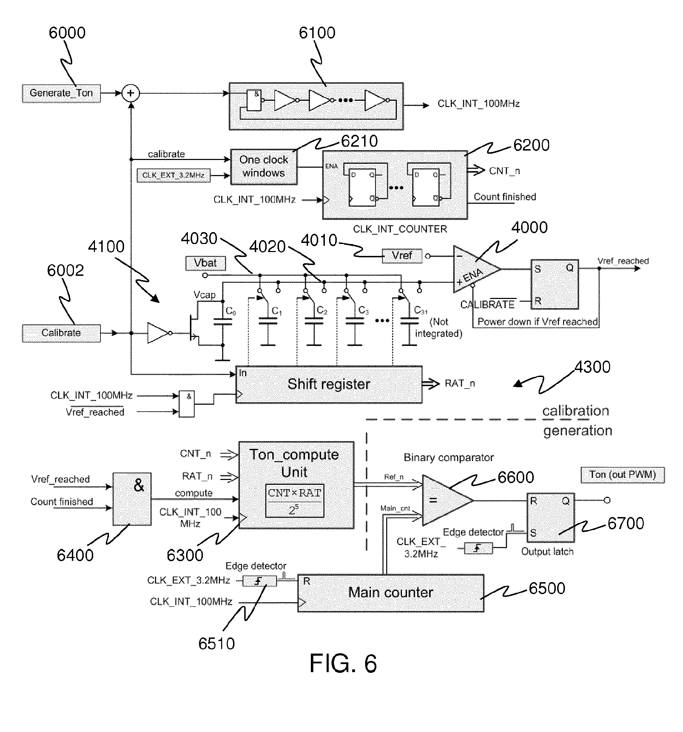

At step 200, a triggering signal is generated. The triggering signal may drive the generation of the pulse signal $T_{ON}$ (step 280); the signal 6000 on FIG. 6. The triggering signal may further start a first calibration at steps 220, 222 and another calibration at steps 230, 232; the signal 6002 on FIG. 6. In practice, the steps of generating the internal clock signal and counting the number *CNT* of pulses of the internal clock signal (230, 232), and generating the number m (220, 222) may be concomitantly triggered in response to the triggering signal 6002.

Next, at step 210, the switching clock period (noted $T_{CLK}$) of the DC/DC (or DC-to-DC) converter is divided into k constant time intervals. The switching clock of the DC/DC converter is the main clock that provides the pulses controlling the one or more power switches of the DC/DC converter. This main switching clock comprises a period noted $T_{CLK}$. In practice, the main switching clock may be a pulse width modulated (PWM) signal.

Dividing $T_{CLK}$ into *k* constant time intervals does not involve that the main switching clock is modified: dividing $T_{CLK}$ means that a number k of time intervals is determined for each pulse of the main switching cycle. In this case the determination may be a computing operation.

The number k may be defined by the relation $k = 2^N$, wherein N is a natural number (0 is excluded). For instance, k=32 for N=5.

Then, at step 230, an internal clock signal is generated. To this aim, an internal clock generator may be used as the one 6100 depicted on FIG. 6. In practice, the internal clock generator may be an asynchronous clock generator as a ring oscillator. Preferably, the internal clock generator may be a low-consumption clock generator. The internal clock generator may be a ring oscillator, *e.g.* a CMOS ring oscillator. The frequency of the clock generator is at least *k*-time higher than the frequency $\dfrac{1}{T_{CLK}}$ of the switching clock of the DC/DC converter with a period $T_{CLK}$; for instance, the frequency of the clock generator may be about 100MHz for k=32 and a main clock with a frequency of 3.2MHz.

Thus, the frequency $f_{CLK\_INT}$ of the internal clock generator is such that $f_{CLK\_INT} > k \cdot \dfrac{1}{T_{CLK}}$. In practice, the oscillator generates an internal clock signal that allows a division of a switching clock period ( $T_{CLK}$) of the DC/DC converter into very small time intervals. In practice, these time intervals may be constant, that is, they have a same duration in time.

It is to be understood that the step 230 may be continuously performed.

Then, at step 232, which is activated during a calibration phase, the clock generator frequency is measured in order to measure the internal oscillator clock frequency. Indeed, the oscillator generating the internal clock may be not accurate enough; for instance, when the internal clock generator is a ring oscillator.

The measurement of the internal clock generator frequency may be performed with an asynchronous counter that counts a number *CNT* of pulses during one main switching cycle $T_{CLK}$, which is accurately defined. The counter starts the counting at the beginning of the DC/DC main clock cycle $T_{CLK}$, and stops at the end of this cycle. The number of pulses of the internal clock is thus counted for one main clock cycle $T_{CLK}$.

The counted number *CNT* may be stored into a binary register. For instance, the asynchronous counter that counts a number *CNT* of pulses can behave as the binary register. It is to be understood that that the number *CNT* is in this case a binary number that can vary from one calibration to another.

Referring to FIG. 6, an asynchronous counter 6200 that counts a number *CNT* of pulses is illustrated. The calibration counter may also be referred to as calibration counter 6200. This asynchronous counter may be comprised a cascade of flip flops (*e.g.* D-type flip-flop,), as known in the art. It is to be understood that any circuit able to count the number *CNT* may be used. Because the counting of the number *CNT* is performed for a main clock cycle $T_{CLK}$, a one clock windows filter 6210 may be placed at the entry of the counter 6200. In FIG. 6, the internal clock signal oscillating at a approximately 100MHz is counted (or calibrated) during one clock period of the main clock oscillating for instance at 3.2MHz; the main switching period of the DC/DC is thus much longer at least k-times than the period of the internal clock generator, wherein k is an integer.

Referring back at FIG. 3, at steps 220 to 224, another calibration is performed allowing to determine the ratio

$$\frac{V_{REF}}{V_{BAT}}$$, wherein $V_{REF}$ is a desired voltage reference at the output of the DC/DC converter and $V_{BAT}$ is the effective voltage at the input of the DC/DC converter. Said otherwise, $V_{BAT}$ is a working input voltage of the DC-to-DC converter. Typically, $V_{BAT}$ may be the output voltage of a battery. As previously mentioned, the respect of the equation

$$\frac{V_{REF}}{V_{BAT}} = \frac{T_{ON}}{T_{CLK}} = \frac{m}{2^N}$$ allows to reach with a good accuracy the required condition of zero inductor current at the end of conduction cycle $T_{CLK}$. At step 210, the main switching clock period of the DC/DC converter has been divided into k constant time intervals, wherein k is defined by the relation $k = 2^N$ with N that is an integer number.

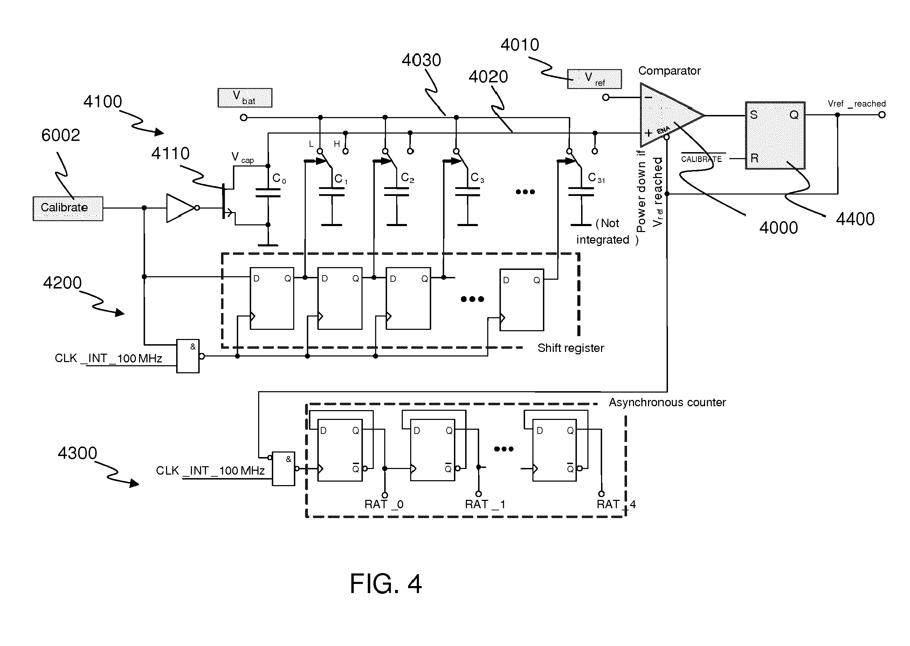

The calibration of $\dfrac{V_{REF}}{V_{BAT}}$ ratio is performed by block depicted in Fig. 4, generating a number m that corresponds to the number of discrete equidistant voltage steps $\Delta V$ of a voltage ramp $V_{CAP}$ before the reference voltage $V_{Ref}$ is reached by the voltage ramp $V_{CAP}$.

To this aim, the calibration may comprise a first step 220 of generating a voltage ramp $V_{CAP}$ of discrete equidistant voltage steps. $V_{CAP}$ is increasing with equidistant voltage steps $\Delta V$. The passing from a first step ($V_m$) to a second step ($V_{m+1}$) may be performed for each pulse of the internal clock so that, for each edge of a pulse, the value of the voltage ramp $V_{CAP}$ increases of $\Delta V$. In practice, each voltage step $\Delta V$ is defined by the relation $\Delta V = \dfrac{V_{BAT}}{k}$ wherein $V_{Bat}$ is a working input voltage of the DC-to-DC converter and *k* is the number of constant time intervals of a main switching clock period $T_{CLK}$ of the DC-to-DC converter.

Then, it is determined at step 222 a number m that counts the number of discrete equidistant voltage steps $V_m$ of the voltage ramp $V_{CAP}$ before the reference voltage $V_{Ref}$ is reached by the voltage ramp $V_{CAP}$. Reaching the reference voltage $V_{Ref}$ means that that the voltage value of $V_{CAP}$ is at least equal to the voltage value of $V_{Ref}$.

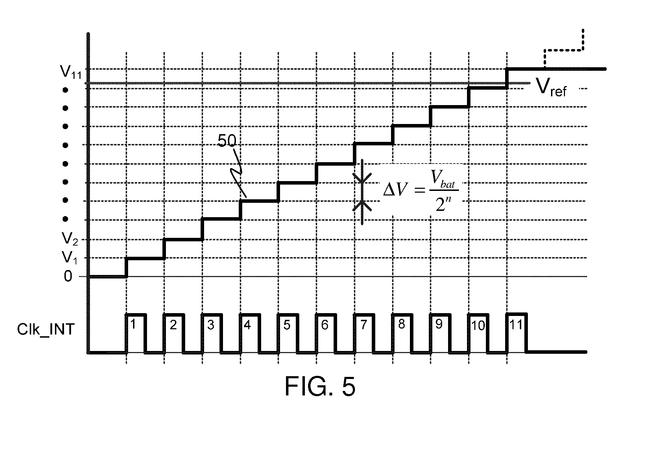

Referring now to FIG. 5, a voltage ramp 50 is illustrated. For each pulse of the internal clock, the value of the voltage ramp $V_{CAP}$ increases of $\Delta V = \dfrac{V_{BAT}}{k}$ with $k = 2^N$. The first voltage value of the voltage ramp is $V_{CAP} = 0$.

Then, as a result of a first new pulse of the internal clock, the voltage value of the voltage ramp is increased of $\Delta V$ such that $V_{CAP} = V_{m=1}$. Then, after a second pulse, the voltage value of the voltage ramp increases again of $\Delta V$, which leads to $V_{CAP} = 2 * \Delta V = V_{m=2}$. This is repeated in Fig. 5 example until an eleventh pulse of the internal clock is triggered: for m = 11, the value of $V_{CAP}$ is such that $V_{CAP} = V_{m=11} > V_{REF}$, that is voltage ramp has reached the reference voltage what is detected by the comparator 4000 illustrated on FIG. 4. The calibration is stops for m = 11.

Referring back to FIG. 3, at step 224, the number m may be stored into a binary register, the number m being a binary number. By this way, it is possible the results of the calibration are stored in the binary registers, allowing the continuous generation (step 280) of the $T_{ON}$ during the calibration, as well as during the interval when the calibration is in not running. Furthermore, while the calibration is not  running, only small part of the circuit is running, which implies very low power consumption, *e.g.* in order of 10μA. The calibration is typically started periodically, e.g. once per second.

Referring now to FIG. 4, an example of a calibration unit generating the number m is depicted. The sequence of calibration is automatically driven by a charge transfer digitizer of the ratio $\dfrac{V_{REF}}{V_{BAT}} = \dfrac{m}{k}$. The number generated by the charge transfer digitizer corresponds accurately to the ratio $\dfrac{V_{REF}}{V_{BAT}}$. The charge transfer digitizer of the ratio $\dfrac{V_{REF}}{V_{BAT}}$ comprises a simple internal logic, described in the following.

The charge transfer digitizer 4100 on FIG. 4 provides the voltage ramp $V_{CAP}$, which is compared to reference voltage the reference voltage $V_{REF}$ 4010. The voltage ramp $V_{CAP}$ is created by the sequential transfer of electrical charges $Q_i$ between a set of capacitors $C_i$, and one main capacitor $C_0$. The number of capacitor may be a simple design choice, for instance $2^N$. In practice, the number of capacitor is equal to the number *k*, but the highest capacitors are not integrated as $V_{REF}$ is always lower than $V_{BAT}$. For instance, the charge transfer digitizer 4100 would have one main capacitor $C_0$ and 31 capacitors $C_i$ for *k*=32. The electrical capacities values of $C_0$ and $C_i$ for storing electrical charges should respect the equidistant voltage steps ΔV for every m.

All the capacitors are connected on grounded side. This amounts to say that all the capacitors are mounted in parallel and grounded on one side. The main capacitor $C_0$ is further connected on its second side to a third line 4020 providing the voltage ramp $V_{CAP}$ : the voltage of the main capacitor $C_0$ thus corresponds to the voltage ramp $V_{CAP}$. Each capacitor $C_i$ of the set is connected on its second side to a respective switch toggled so that the capacitor $C_i$ is connected to a second line 4030 providing $V_{Bat}$ or connected to the third line 4020 providing the voltage ramp $V_{CAP}$.

The voltage ramp $V_{CAP}$ is the result of a charge-transfer calibration procedure.

In a first step of the charge-transfer calibration procedure, the main capacitor $C_0$ is discharged, that is, the voltage $V_{CAP} = 0$. In practice, the discharging of the main capacitor $C_0$ is performed by a switch 4110 (for instance a transistor acting as switch) short-circuiting the main capacitor $C_0$: the switch is closed (for instance the transistor is ON) when no calibration is performed and the switch is open (for instance the transistor is OFF) when the calibration starts. The open/close of the switch may be performed as a result of the triggering signal generated at step 200.

In a second step of the charge-transfer calibration procedure, the sequential transfer of electrical charges $Q_i$ between the set of capacitors $C_i$ and one main capacitor $C_0$ is carried out. The voltage of the main capacitor $C_0$, is the voltage ramp $V_{CAP}$, and is increased by ΔV for every single new pulse of the internal clock. When considering the grounded main capacitor $C_0$, with initial voltage $V_{C0+}= 0$, and by applying a charge stored in a capacitor $C_1$ charged to $V_{BAT}$, the voltage step is of:

$$\Delta V = V_1 = \frac{V_{BAT} \cdot C_1}{C_0 + C_1} \quad (6)$$

When considering equidistant voltage steps $V_m$, the equation (6) may be generalized for any mth voltage as:

$$V_m = \frac{m \cdot V_{BAT}}{2^N} = \frac{V_{BAT} \cdot \sum\limits_{i=1}^{m} C_i}{C_0 + \sum\limits_{i=1}^{m} C_i} \quad (7)$$

where k=$2^N$ is the clock period division constant. It results from the equation (7) the voltage step size is:

$$V_m = \frac{V_{BAT}}{2^N} \quad (8)$$

This constant voltage steps can be obtained for the capacitor selected by following the rule:

$$C_j = \frac{j \cdot C_0}{2^N - j} - \sum_{i=1}^{j-1} C_i \qquad (9)$$

where $j$ is the $j$-th capacitor in FIG. 4. If this equation is fulfilled, the voltage $V_{CAP}$ is increasing with discrete equidistant steps $\Delta V$, as shown in FIG. 5.

During the calibration, each respective switch of a capacitor $C_i$ is toggled so that the capacitors $C_i$ is connected to the second line 4030 providing $V_{BAT}$ or connected to the third line $V_{CAP}$. In practice, all the capacitors of the set may be initially connected to the second line providing the voltage $V_{BAT}$ so that all the capacitors $C_i$ are electrically charged $V_{BAT}$ voltage. For each pulse of the internal clock, one respective switch of a capacitor $C_i$ is toggled for connecting the capacitor in parallel to $C_0$. Said otherwise, one respective switch of a capacitor $C_i$ is toggled for connecting the capacitor to the third line.

The switches of the capacitors $C_i$ are controlled by a shift register having the internal clock signal as clock input. The shift register may be comprised of a cascade of flip flops circuits that share the internal clock, as known in the art.

The calibration unit may comprise a comparator 4000 on which are connected a first line 4010 providing the reference voltage $V_{REF}$ and a third line 4020 providing the voltage ramp $V_{CAP}$. This amounts to say that a first input 4010 is provided on the inverting input (-) of the comparator, and that second input 4020 is provided on the non-inverting input (+) of the comparator. The comparator determines that the reference voltage $V_{Ref}$ is reached by the voltage ramp $V_{CAP}$ upon comparison of the voltages on the first and third line, that is, on the first and second inputs. When the voltage ramp $V_{CAP}$ reaches the reference voltage $V_{REF}$, the comparator 4000 generates an event and stops the calibration.

The calibration unit may comprise a counter 4300 for counting the number m. The counter that counts the number m starts the counting at the beginning of the calibration procedure and stops at the end of this procedure, that is, once the comparator 4000 stops the calibration. Said otherwise, the counter is started simultaneously with the shift register that controls the toggling of the switches of the capacitors $C_i$ of the set and is stopped when the reference voltage $V_{REF}$ is reached by the voltage ramp $V_{CAP}$. The counter has the internal clock signal as clock input and may be an asynchronous or synchronous counter.

Still referring to FIG. 4, an asynchronous counter 4300 that counts the number m of discrete equidistant voltage steps $V_m$ of the voltage ramp $V_{CAP}$ is illustrated. This asynchronous counter may be comprised a cascade of flip flops (*e.g.* D-type flip-flop,) sharing the same internal clock as the shift register. It is to be understood that any circuit able to count the number m may be used.

In practice, the counter for generating the number m acts also as a binary register for storing the generated number m after the calibration. It is to be understood that the generated number m is in this case a binary number.

The calibration unit may further comprise a circuit 4400 for generating an output flag $V_{REF\_reached}$ when the voltage ramp $V_{CAP}$ is determined as reaching the reference voltage $V_{REF}$. The circuit 4400 may be a Q flip-flop memory cell, as depicted on FIG. 4. When the output flag $V_{REF\_reached}$ is generated, the asynchronous counter 4300 and shift register 4200 are stopped.

Referring back to FIG. 3, at step 240, a binary number $T_{ON\_WIN}$ is computed from the calibrated $k \cdot \dfrac{V_{REF}}{V_{BAT}} = m$ value generated as a result of the calibration, and pulses count *CNT* of the internal clock. The $\dfrac{V_{REF}}{V_{BAT}}$ value is obtained from the equation (5) $\dfrac{V_{REF}}{V_{BAT}} = \dfrac{T_{ON}}{T_{CLK}} = \dfrac{m}{k}$. $T_{ON\_WIN}$ is directly obtained from the equation (4) and can be computed as $T_{ON\_WIN} = \dfrac{CNT \cdot m}{k}$. $T_{ON\_WIN}$ is the duration of the pulse signal $T_{ON}$. Advantageously, the accuracy of the generated $T_{ON}$ is given by the division interval k, because the calibration procedure described previously can be done with very high accuracy.

The computation of $T_{ON\_WIN}$ is performed by a dedicated computing unit, as the one 6300 illustrated on FIG. 6. In the electrical circuit driving the generation of $T_{ON}$ signal of FIG. 6, the computation of $T_{ON\_WIN}$ is performed on binaries values once after the calibration. Indeed, both the numbers m and *CNT* are stored into a respective binary registers (4300, 6200), and they are therefore binary numbers. It is to be understood that the integration of the invention with digital sub-micro-meter technologies is make easier compared with large-scale analog CMOS technologies.

Referring back to FIG. 3, at steps 250 to 280, a pulse signal $T_{ON}$ driving power switches of a pulse-skipping modulated DC-to-DC converter is generated. The pulse signal ($T_{ON}$) generation is driven from the computed number $T_{ON\_WIN}$. Said otherwise, the pulse signal ($T_{ON}$) is generated from the computed number $T_{ON\_WIN}$ .At step 250, a main counter starts counting and provides a number that is the result of the counting. This main counter is incremented by the generated internal clock signal, *e.g.* the 100MHz signal generated by block 6100 on FIG. 6. At the beginning of each conduction cycle of the DC/DC converter, the main counter is reset. The conduction cycle $T_{CLK}$ of the DC/DC converter is the time elapsed between two consecutive edges of the pulse when the converter is operating in normal conditions (*i.e.* the converter is not running in the pulse-skipping mode).

Referring now to FIG. 6, the main counter 6500 is illustrated. It comprises an edge detector for detecting each edge of the pulse $T_{CLK}$ of the DC/DC converter. The edge detector is connected to the reset entry of the counter so that the counter is reset for each detected edge, which signifies the beginning of pulse $T_{CLK}$. The counter is clocked by the internal clock 6100.

Then, at step 260, the output of the main counter (that is, the number provided by the main counter) is compared the computed number $T_{ON\_WIN}$. The comparison consists in checking the equality between both numbers.

Referring back to FIG. 6, it depicted an equality comparator 6600 having as inputs the computed number $T_{ON\_WIN}$ and the number provided by the main counter 6500. The equality comparator triggers the stop of the first conduction cycle (upper MOS $Q_1$ in Fig. 2) and can stop the ring oscillator 6100 in order to save the power consumption (step 270). In other terms, the equality comparator triggers the stop of the oscillator generating the internal clock signal (step 270) when the number $T_{ON\_WIN}$ and the number provided by the main counter are equal. This advantageously decreases the energy consumption, *e.g.* the power of the battery connected as input of the DC/DC converter is saved.

At step 280, the pulse signal $T_{ON}$ driving power switches of the pulse-skipping modulated DC/DC converter is generated. In practice, the steps 270 and 280 are simultaneously triggered. Said otherwise, when the computed number $T_{ON\_WIN}$ and  the number provided by the main counter are equal, the comparator 6600 may reset an output latch 6700 and the generation of the signal $T_{ON}$ is stopped, as illustrated on FIG. 6 .

It is to be understood that the $T_{ON}$ generator system according to the invention may be implemented on an integrated circuit, e.g. using transistors such as, but not limited to, CMOS transistors. The $T_{ON}$ generator is typically an electrical circuit. It is to be understood that $T_{ON}$ generator system may be implemented with various electronic components suitable to perform the functions. The electronic components may be thus packaged discretely, as arrays or networks of like components, or integrated inside of packages such as semiconductor integrated circuits or thick film devices. It is to be understood that the different values and numbers may be binary values and numbers on which binary mathematical operations can be performed. For instance, the numbers *k, m, CNT* may be binary numbers. As another example, the computed number $T_{ON\_WIN}$ may be a binary number. Interestingly, using binary number and values allow to make possible a digital implementation of the pulse signal $T_{ON}$ generator, *e.g.* on an integrated circuit. Furthermore, due to the very good inherent matching of the capacitors in modem CMOS process, the final accuracy of the calibration is very high.

In practice, the circuit driving the generation of the signal $T_{ON}$ of the present invention can be integrated on switched-mode DC/DC converter comprising power switches and adapted to be modulated by a pulse-skipping modulation. The circuit thus manages power switches.

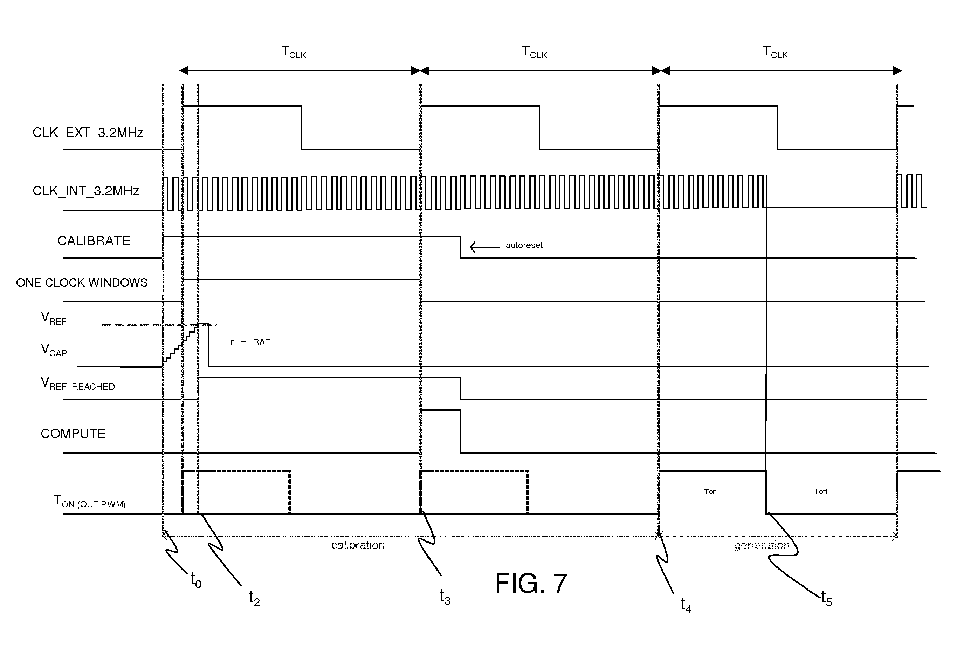

Referring now to FIG. 7, it is a time-plot of the generation of the $T_{ON}$ interval.

The process starts (step 200) at time to with the first request of the calibration: a signal calibrate 6002 goes to High. As a result of this signal, a ring oscillator starts generating the internal clock signal, which is counted (calibrated) during one clock cycle CLK_EXT_3.2MHz. Here, a switching clock period $T_{CLK}$ of the DC/DC converter is divided small intervals. Moreover, each conduction cycle $T_{CLK}$ of the DC/DC converter is divided into k time intervals - for instance 32. For the sake of clarity of the FIG. 7, the number of pulses of the internal clock (CLK_INT_100MHZ) shown for one period TCLK is limited.

The calibration of the ratio $\dfrac{V_{REF}}{V_{BAT}}$ is triggered (steps 220-224) in the same time to as for the starting of internal clock (step 230). The calibration unit generates a voltage ramp $V_{CAP}$, until this ramp reach $V_{REF}$. The number m of steps of the voltage ramp $V_{CAP}$ is now determined, as well as the number *CNT* of pulses of the internal clock for one main conduction cycle $T_{CLK}$. When both, counting *CNT* and $\dfrac{V_{REF}}{V_{BAT}}$ ratio calibration are done, at $t_3$, the computation unit

computes the number $T_{ON}$ _window (step 240).

Then, the pulse signal $T_{ON}$ is generated (step 280) at $t_4$ and every next beginning of the conduction cycle $T_{CLK}$. During the generation of the pulse signal $T_{ON}$, the computed reference value $T_{ON\_WIN}$ remains constant. At the beginning of the main conduction cycle $T_{CLK}$, at $t_4$, the output of the generator for generating the pulse signal $T_{ON}$ is set to High. In the same time, at $t_4$, the main counter starts to be incremented from zero by the internal ring oscillator of around 100MHz. When the main counter (step 250) reaches the computed number $T_{ON\_WIN}$ (step 260), at $t_5$, the comparator resets the output latch and sets the generator output to zero. Simultaneously, the ring oscillator is stopped in order to save power (step 270), *e.g.* the power of the input battery and the upper MOS in Fig.2 open, whereas its bottom counterpart Q1 closes. It is noticeable on the figure that the generated pulse signal $T_{ON}$ has a duration which is, in this example, shorter than the one half of the signal of the switching clock period $T_{CLK}$, but it can be also longer.

The calibration of $\dfrac{V_{REF}}{V_{BAT}}$ ratio should be run at least once at the beginning of the operation. However, a periodical calibration of $\dfrac{V_{REF}}{V_{BAT}}$ ratio with simultaneous calibration of the ring oscillator frequency (which varies with $V_{BAT}$ and Temperature) is recommended. Indeed, the numbers m and *CNT* generated may vary with $V_{BAT}$ (*e.g.* battery discharging) and the temperature which can be caused by changing of the converter operating conditions. In practice, as shown on FIG. 7, the calibration signal goes to Low (autoreset) once a time duration of the calibration and computation has elapsed.

**Claims**

1. A method for generating a pulse signal ($T_{ON}$) driving power switches of a pulse-skipping modulated DC-to-DC converter, the method comprising:

   - dividing (210) a switching clock period ($T_{CLK}$) of the DC-to-DC converter into k constant time intervals;
   - generating (230) an internal clock signal having a frequency at least *k*-time higher than a frequency $1/T_{CLK}$ of the switching clock;
   - counting (232) a number *CNT* of pulses of the internal clock signal during one clock period of the switching clock period;
   - generating an number m (220, 222) that counts a number of discrete equidistant voltage steps $\Delta V$ of a voltage ramp $V_{CAP}$ before a reference voltage $V_{REF}$ is reached by the voltage ramp $V_{CAP}$, each voltage step $\Delta V$ being defined by the relation $\Delta V = \dfrac{V_{BAT}}{k}$ wherein $V_{BAT}$ is a working input voltage of the DC-to-DC converter;

   - generating the pulse signal ($T_{ON}$) (280) from a computed number $T_{ON\_WIN}$ such that $T_{ON\_WIN} = \dfrac{CNT \cdot m}{k}$,

   $T_{ON\_WIN}$ being the duration of the pulse signal ($T_{ON}$).

2. The method of claim 1, further comprising a step of:

   - storing (224) the generated number m into a binary register.

3. The method of any of claims 1 to 2, further comprising the steps of:

   - starting a main counter (250) that is incremented by the generated internal clock signal and that is reset at the beginning of a conduction cycle of the DC-to-DC converter, the main counter providing a number;
   - comparing the computed number $T_{ON\_WIN}$ (260) with the number provided by the main counter; and
   - stopping (270) the generation of the internal clock signal when the computed number $T_{ON\_WIN}$ and the number provided by the main counter are equal.

4. The method of any of claims 1 to 3, wherein the step (280) of generating the pulse signals ($T_{ON}$) is performed at the beginning of a conduction cycle of the DC-to-DC converter.

5. The method of any of claims 1 to 4, wherein the steps of generating the internal clock signal, counting the number *CNT* of pulses of the internal clock signal, and generating the number m are concomitantly triggered in response to a triggering signal.

6. A circuit for generating a pulse signal ($T_{ON}$) driving power switches in a pulse-skipping modulated DC-to-DC converter, the circuit comprising:

- an oscillator (6100) generating an internal clock signal having a frequency at least *k*-time higher than a frequency $1/T_{CLK}$ of a switching clock of the DC-to-DC converter, the switching clock having a period $T_{CLK}$;
- a calibration unit generating a number m that counts a number of discrete equidistant voltage steps $\Delta V$ of a voltage ramp $V_{CAP}$ before a reference voltage $V_{REF}$ is reached by the voltage ramp $V_{CAP}$, each voltage step $\Delta V$ being defined by the relation $\Delta V = \dfrac{V_{BAT}}{k}$ wherein $V_{BAT}$ is a working input voltage of the DC-to-DC converter;
- a counter (6200) for counting a number *CNT* of pulses of the internal clock signal during one clock period of the switching clock period;
- a computing unit (6300) for computing a number $T_{ON\_WIN}$ such that $T_{ON\_WIN} = \dfrac{CNT \cdot m}{k}$, $T_{ON\_WIN}$ being the duration of the pulse signal ($T_{ON}$); and
- a generator (6500, 6600, 6700) for generating the pulse signal ($T_{ON}$) from the computed number $T_{ON\_WIN}$.

7.

The circuit of claim 6, wherein the calibration unit comprises a charge transfer digitizer (4100) of the ratio $\dfrac{V_{REF}}{V_{BAT}}$, the charge transfer digitizer comprising:

- a first line (4010) providing the reference voltage $V_{REF}$;
- a second line (4030) providing the working input voltage $V_{BAT}$;
- one main capacitor ($C_0$) and a set of capacitors ($C_i$) mounted in parallel and grounded on one side, the main capacitor ($C_0$) being connected on its second side to a third line (4020) providing the voltage ramp $V_{CAP}$, and each capacitor ($C_i$) of the set being connected on its second side to a respective switch toggled so that the capacitor ($C_i$) is connected to the second or the third line;
- a shift register (4200) having the internal clock signal as clock input and controlling the toggling of the switches of the capacitors ($C_i$) of the set, the switches being controlled so that a supplementary electrical charge of one of the capacitors ($C_i$) of the set is transferred to the main capacitor ($C_0$) for each pulse of the internal clock signal, a voltage step $V_m$ of the voltage ramp $V_{CAP}$ having a value defined by the relation

$$V_m = \frac{V_{BAT} \cdot \sum\limits_{i=1}^{m} C_i}{C_0 + \sum\limits_{i=1}^{m} C_i} .$$

8. The circuit of any of claims 6 to 7, wherein the calibration unit further comprises a counter (4300) for counting the number m, the counter having the internal clock signal as clock input, the counter being started simultaneously with the shift register that controls the toggling of the switches of the capacitors ($C_i$) of the set and being stopped when the reference voltage $V_{REF}$ is reached by the voltage ramp $V_{CAP}$.

9. The circuit of any of claim 8, wherein the counter for counting the number m acts as a binary register for storing the generated number m.

10. The circuit of any of claims 6 to 9, wherein the calibration unit further comprises a comparator (4000) connected to the first line providing the reference voltage $V_{REF}$ and the third line providing the voltage ramp $V_{CAP}$, the comparator determining whether $V_{CAP}$ reaches $V_{REF}$ and stopping the shift register when $V_{CAP}$ reaches $V_{REF}$.

11. The circuit of any of claims 6 to 10, wherein the generator of the pulse signal ($T_{ON}$) comprises an output latch (6700) having as inputs the number $T_{ON\_WIN}$ and the clock ($T_{CLK}$) of the DC-to-DC, and providing as output the pulse signal ($T_{ON}$).

12. The circuit of any of claims 6 to 11, further comprising an equality comparator (6600) having as inputs the number $T_{ON\_WIN}$ and a number provided by main counter (6500) that is incremented by the generated internal clock signal and that is reset at the beginning of a conduction cycle of the DC-to-DC converter, the equality comparator triggering the stop of the oscillator generating the internal clock signal when the number $T_{ON\_WIN}$ and the number provided by the main counter are equal.

13. The circuit of any of claims 6 to 12 implemented on an integrated circuit.

14. A switched-mode DC-to-DC converter comprising power switches and adapted to be modulated by a pulse-skipping modulation managed by the circuit of any of claims 6 to 13.

FIG. 1

FIG. 2

Generate a triggering signal — 200

divide a switching clock period into k time intervals — 210

220

generate a discrete voltage ramp of equidistant voltage steps

230

generate an internal clock signal

determine the $m$ steps of the voltage ramp before a reference voltage is reached by the voltage ramp — 222

count a number $CNT$ of pulses — 232

store $m$ into a binary register. — 224

compute $T_{ON\_WIN} = \dfrac{CNT \cdot m}{k}$ — 240

250

start a main counter providing a number

compare $T_{ON\_WIN}$ with the number provided by the main counter — 260

270

stop the internal clock signal if $T_{ON\_WIN}$ = the number of the main counter

generate the pulse signal $T_{ON}$ — 280

FIG. 3

FIG. 4

EP 2 680 420 A1

$$\Delta V = \frac{V_{bat}}{2^n}$$

FIG. 5

FIG. 6

FIG. 7

Europäisches
Patentamt

European
Patent Office

Office européen
des brevets

# EUROPEAN SEARCH REPORT

Application Number

EP 12 30 5750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU ZHANG ET AL: "Digital PWM/PFM controller with input voltage feed-forward for synchronous buck converters", APPLIED POWER ELECTRONICS CONFERENCE AND EXPOSITION, 2008. APEC 2008. TWENTY-THIRD ANNUAL IEEE, IEEE, PISCATAWAY, NJ, USA, 24 February 2008 (2008-02-24), pages 523-528, XP031253297, ISBN: 978-1-4244-1873-2 * figures 1,2,3,5 * | 1,2,4-6, 13,14 | INV. H02M3/158 |
| A | VAHID YOUSEFZADEH ET AL: "Hybrid DPWM with Digital Delay-Locked Loop", COMPUTERS IN POWER ELECTRONICS, 2006. COMPEL '06. IEEE WORKSHOPS ON, IEEE, PI, 1 July 2006 (2006-07-01), pages 142-148, XP031044986, ISBN: 978-0-7803-9724-8 * Section II * | 1-14 | |
| A | SYED A ET AL: "Digital PWM controller with feed-forward compensation", 2004 IEEE APPLIED POWER ELECTRONICS CONFERENCE AND EXPOSITION, APEC 04, IEEE, ANAHEIM, CA, USA, vol. 1, 22 February 2004 (2004-02-22), pages 60-66, XP010703481, DOI: 10.1109/APEC.2004.1295788 ISBN: 978-0-7803-8269-5 * Section II A; figures 1,5 * | 1-14 | TECHNICAL FIELDS SEARCHED (IPC) H02M |

-/--

The present search report has been drawn up for all claims

| Place of search | Date of completion of the search | Examiner |
|---|---|---|
| The Hague | 16 January 2013 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office — Europäisches Patentamt / European Patent Office / Office européen des brevets

## EUROPEAN SEARCH REPORT

Application Number

EP 12 30 5750

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATELLA B J ET AL: "High-frequency digital controller IC for DC/DC converters", APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, vol. CONF. 17, 10 March 2002 (2002-03-10), pages 374-380, XP010582947, DOI: 10.1109/APEC.2002.989273 ISBN: 978-0-7803-7404-1 * Sections 3, 4; figures 1,3,10 * | 1-14 | |
| A | SYED A ET AL: "Digital pulse width modulator architectures", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, vol. 6, 20 June 2004 (2004-06-20), pages 4689-4695, XP010739156, DOI: 10.1109/PESC.2004.1354828 ISBN: 978-0-7803-8399-9 * Sections II, IV * | 1-14 | TECHNICAL FIELDS SEARCHED (IPC) |
| A | AHMED EMIRA ET AL: "DC-DC converter with ON-time control in pulse-skipping modulation", IEEE INTERNATIONAL SYMPOSIUM ON CIRCUITS AND SYSTEMS. ISCAS 2010 - 30 MAY-2 JUNE 2010 - PARIS, FRANCE, IEEE, US, 30 May 2010 (2010-05-30), pages 2746-2749, XP031724276, ISBN: 978-1-4244-5308-5 * Sections II, III; figures 1,3 * | 1-14 | |

The present search report has been drawn up for all claims

| Place of search | Date of completion of the search | Examiner |
|---|---|---|
| The Hague | 16 January 2013 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)